# EUROPEAN PATENT SPECIFICATION

(11) **EP 4 184 048 B1**
(45) Date of publication and mention of the grant of the patent: **29.10.2025**
(21) Application number: 22208128.3
(22) Date of filing: 17.11.2022
(51) Int. Cl.: F16L 25/00, F16L 37/098

(54) **VENTILATION SYSTEM WITH IMPROVED VENTILATION AIR DUCT HOSE FITTING**
LÜFTUNGSSYSTEM MIT EINEM VERBESSERTEN VERBINDUNGSSTÜCK FÜR DEN BELÜFTUNGSSCHLAUCH
SYSTÈME DE VENTILATION AVEC RACCORD DE TUYAU DE CONDUIT D'AIR DE VENTILATION AMÉLIORÉ

(30) Priority: 18.11.2021 BE 202105891
(43) Date of publication of application: 24.05.2023
(73) Proprietor: Ventilation Products and Ideas BVBA, 2970 Schilde (BE); Projimmo BVBA, 2547 Lint (BE)
(72) Inventor: Frencken, Gunter, 2970 Schilde (BE)
(74) Representative: Arnold & Siedsma

(56) References cited:
- DE-A1- 19 615 442
- DE-A1- 19 747 959
- GB-A- 2 277 568

## Description

### Field of the invention

The invention relates to a ventilation system with a fitting for coupling a ventilation air duct hose to such a ventilation system.

### Background

Poorly insulated homes and recent trends and guidelines in respect of insulating buildings have created increased interest in the ventilation of these buildings. This is because a lack of ventilation results in health problems in residents or visitors of the poorly ventilated buildings. Moisture problems moreover arise, and poorly ventilated buildings promote the formation of mould. Ventilation systems provide ventilation in spaces of the buildings by drawing in air and then distributing it in the building via ventilation air duct hoses.

Mounting of ventilation air duct hoses typically takes place using a tensioning strap which surrounds the ventilation air duct hose. The tensioning strap is then tightened so that the ventilation air duct hose is tensioned onto the ventilation system. Because the ventilation systems are incorporated in spaces such as a ceiling plenum, mounting of ventilation air duct hoses is however labour-intensive. The tensioning strap furthermore provides a sub-optimal air seal, whereby energy is lost.

Document GB 2 277 568 A discloses a fastening coupling for corrugated insulation pipes coupled to switch cabinets, housings, machines or the like. It includes a tubular sleeve with a movable securing tongue connected by flexible webs. The tongue acts as a two-armed lever: one arm locks into the tube's groove, while the other serves as a pressure plate for release.

### Summary of the invention

Embodiments of the invention have the object of providing a fitting which simplifies coupling of a ventilation air duct hose to a ventilation system.

The invention provides for this purpose a fitting for coupling a ventilation air duct hose to a ventilation system. The fitting further has a first open outer end which is configured to receive the ventilation air duct hose and a second open outer end which is configured to be coupled to the ventilation system. The fitting comprises a wall bounding a channel which extends between the first open outer end and the second open outer end and in which the ventilation air duct hose is arrangeable. The fitting further comprises a coupling element which is connected pivotally to the wall so that the coupling element is pivotable between a first state and a second state, wherein the coupling element has a first tongue and a second tongue which extend in opposite directions relative to each other. The first tongue comprises a coupling surface which extends into the channel and is provided to couple the ventilation air duct hose to the fitting in the first state. The second tongue is provided and configured to, when a force is exerted thereon, pivot the first tongue outward in order to move the coupling element into the second state, wherein the ventilation air duct hose is uncoupled in the second state.

In this way the fitting on one hand allows the ventilation air duct hose to be arranged in the fitting in simple manner. The first open outer end allows the ventilation air duct hose to be arrangeable in the fitting. Once the ventilation air duct hose has been arranged in the fitting, the ventilation air duct hose is fixed in the fitting using the coupling element which couples the ventilation air duct hose to the fitting using the coupling surface. Because the coupling element is arranged pivotally, the coupling element is pivotable between the first and second position. This considerably simplifies the mounting of the ventilation air duct hose. More specifically, during arranging of the ventilation air duct hose the coupling element is pivotable into the first position, this compared to existing solutions, so that the mutual coupling can be realized in time-saving and simple manner. A further advantage of the pivotable coupling element is that the coupling element is pivotable to the second position, for instance for maintenance to the ventilation system, in which the ventilation air duct hose can be uncoupled in rapid and simple manner. It is noted that the ventilation air duct hose is then, for instance following the maintenance work, once again couplable in simple manner by arranging it in the fitting again and then pivoting the coupling element to the first position.

The fitting preferably comprises an elastically deformable connection between the coupling element and the wall. This elastically deformable connection has the advantage that this connection is resilient. Such a resilient connection allows the coupling element to be urged back into one of the first or the second position, preferably the first position. In other words, the elastically deformable connection places the coupling body back in its original position without external force. This further reduces the number of operations needed by a fitter to couple the ventilation air duct hose to the fitting.

The wall, the coupling element and the connection are preferably formed integrally. This reduces the number of components comprised by the ventilation system, which reduced number of components allows the ventilation air system to be mounted more rapidly and in simplified manner.

The wall is preferably provided at least at the position of the connection to the coupling element with a thickened portion. This considerably increases the lifespan of the fitting.

The coupling surface preferably comprises an oblique surface which is configured to make the first tongue move outward during arranging of ventilation air duct hose. In this way the fitter is able to focus on correctly inserting the ventilation air duct hose during arranging. The fitter need here not handle the coupling element, which considerably simplifies and speeds up the mounting of the ventilation air duct hose in the fitting. When the coupling element is in rest in the first position, this on one hand allows an inward movement of the ventilation air duct hose from outside the fitting into the channel to take place with a relatively low resistance. On the other hand, an outward movement of the ventilation air duct hose out of the channel, without the coupling element being pivoted into the second position, experiences a considerably higher resistance. In other words, the ventilation air duct hose is held in the channel.

The second tongue preferably extends at an angle measured between a central axis of the fitting and an inner surface of the second tongue.

In the second state the second tongue preferably lies substantially in line with the inner surface of the wall. This allows the ventilation air duct hose to be removed in substantially frictionless manner.

The coupling element is preferably provided close to the first open outer end. This makes the coupling element relatively accessible during mounting and during dismounting.

The fitting preferably comprises a further coupling element. The coupling elements are provided diametrically relative to each other at the first open outer end. Two coupling elements improve the coupling of the ventilation air duct hose to the fitting, as compared to one single coupling element. Owing to the diametrical position, the two coupling elements are simultaneously pivotable and moreover using one tool or hand of a fitter.

The wall is preferably provided close to the first and/or the second outer end with a first flange which extends from an outer surface of the wall. The first outer end which is provided with a flange has the advantage that the first open outer end is reinforced. In this way the fitting forms a more robust whole. The second outer end which is provided with a flange has on one hand the same advantage as the first part, but on the other hand also has a further advantage. More specifically, the flange at the second outer end has the advantage that the flange lies adjacently of the ventilation system and strengthens a coupling thereto. This is because the flange absorbs forces which would otherwise be absorbed by the mutual connection between the fitting and the ventilation system.

The wall is preferably provided at the position of the second outer end with a second flange which protrudes from an inner surface of the wall and bounds an opening at the position of the second outer end. The second flange forms a stop surface so that the fitter cannot arrange the ventilation air duct hose beyond the stop surface. The fitting further preferably comprises a sealing means which is provided to be placed against the second flange and configured to form together with an edge of the ventilation air duct hose a substantially airtight closure when the ventilation air duct hose is coupled in the fitting. This prevents supplied or discharged air from escaping at an undesired location in the ventilation system. This improves the thermal characteristics of the ventilation system. The power consumption of the ventilation system is furthermore also improved in this manner. Because the supplied or discharged air is prevented from escaping, a required airflow rate, which is typically provided by one or more fans, is smaller. This has the result that the fan can have smaller dimensions or can function at a lower flow rate. The consumption of the ventilation system, i.e. the fan in said example, is therefore lower owing to the improved manner of sealing.

The fitting preferably comprises one or more fastening elements which are arranged at the second outer end and are configured to couple the fitting to the external ventilation component in mutually engaging manner. The one or more fastening elements are further preferably arranged and configured such that the fitting can be fastened to the external ventilation component by rotating the fitting about an axis. The construction of a ventilation system is further simplified in this way.

### Brief description of the figures

The above stated and other advantageous features and objects of the invention will become more apparent, and the invention better understood, on the basis of the following detailed description when read in combination with the accompanying drawings, in which:
Figure 1 is a perspective view of a fitting according to a preferred embodiment, as seen from the first open outer end;
Figure 2 is a perspective view of a fitting according to a preferred embodiment, as seen from the second open outer end;
Figure 3 shows a cross-section of the fitting shown in figure 1;
Figure 4 shows a cross-section of the fitting shown in figure 1 in which a ventilation air duct hose is arranged.

### Detailed embodiments

The following detailed description relates to determined specific embodiments. The teaching hereof can however be applied in different ways. The same or similar elements are designated in the drawings with the same reference numerals.

The terms "comprising", "comprises" and "composed of" as used here are synonymous with "including". The terms "comprising", "comprises" and "composed of" when referring to stated components, elements or method steps also comprise embodiments which "consist of" the components, elements or method steps.

The terms first, second, third and so on are further used in the description and in the claims to distinguish between similar elements and not necessarily to describe a sequential or chronological order, unless this is specified. It will be apparent that the thus used terms are mutually interchangeable under appropriate circumstances and that the embodiments of the invention described here can operate in an order other than described or illustrated here.

Reference in this specification to "one embodiment", "an embodiment", "some aspects", "an aspect" or "one aspect" means that a determined feature, structure or characteristic described with reference to the embodiment or aspect is included in at least one embodiment of the present invention. The manifestations of the sentences "in one embodiment", "in an embodiment", "some aspects", "an aspect" or "one aspect" in different places in this specification thus do not necessarily all refer to the same embodiment or aspects. As will be apparent to a skilled person in this field, the specific features, structures or characteristics can further be combined in any suitable manner in one or more embodiments or aspects. Although some embodiments or aspects described here comprise some but no other features which are included in other embodiments or aspects, combinations of features of different embodiments or aspects are further intended to fall within the context of the invention and to form different embodiments or aspects, as would be apparent to the skilled person.

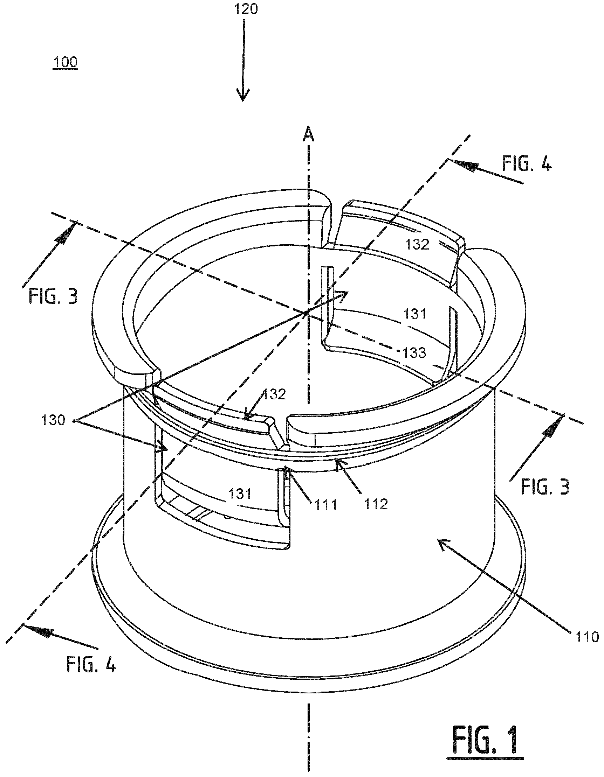

Figure 1 shows a perspective view of a fitting 100 for coupling a ventilation air duct hose B to a ventilation system (not shown). The ventilation system can comprise a ventilation collector, a further ventilation air duct hose, a ventilation unit and so on, to which the fitting 100 is couplable. In the context of the application a ventilation air system is a system for discharging and/or supplying air from and to a space, for instance a home, office or factory building. It is noted that said example spaces are not limitative. It is further noted in the context of the application that the discharged and/or supplied air may or may not be conditioned and may or may not contain contaminants. Fitting 100 can thus also be utilized for coupling an air duct hose in for instance a central dust extraction system. Figure 1 further shows broken lines representing an intersecting plane which is further elucidated in the corresponding stated figure.

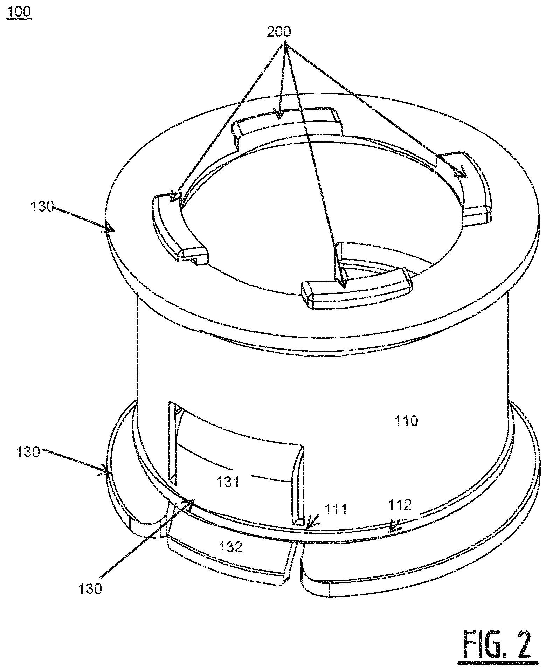

More specifically, figure 1 shows a perspective view of the fitting 100 as seen from a first open outer end thereof. Fitting 100 comprises the first open outer end which is configured to receive the ventilation air duct hose (not shown). The fitting further comprises a second open outer end which is configured to be coupled to the ventilation system. The second outer end is further elucidated with reference to figure 2.

Fitting 100 comprises a wall 110 which bounds a channel 120 extending between the first open outer end and the second open outer end. The ventilation air duct hose is arrangeable in the channel via the first open outer end. The first open outer end allows the ventilation air duct hose to be arrangeable in the fitting. The wall 110 forms a jacket extending around the channel 120. The wall and the channel are shown according to a preferred embodiment in which they have a circular cross-section. Depending on the dimensions of the ventilation air duct hose, a diameter of channel 120 is chosen accordingly. Ventilation air duct hoses are available in numerous dimensions, but are mainly classified according to their nominal diameter. The nominal diameter is referred to as DN. DN is a dimensionless reference which is used for measuring mutually fitting parts. These are for instance tubes and fittings. Owing to the nominal diameter, it is possible for the components for mutual connection to be matched closely to each other. The nominal diameter of the channel will resemble the outer diameter of the ventilation air duct hose.

Fitting 100 further comprises a coupling element 130 which is connected pivotally to the wall 110. The coupling element 130 which is connected pivotally to the wall 110 allows the coupling element 130 to be pivotable between a first state and a second state. Both the first and the second state can be a rest state of the coupling element 130. The rest state is the state of coupling element 130 under normal conditions, without exertion of force and without the ventilation air duct hose.

Coupling element 130 has a first tongue 131 and a second tongue 132, these extending in opposite direction relative to each other. The pivoting of coupling element 130 is understood to mean that, when first tongue 131 moves in a first direction, the second tongue moves in a second direction opposite thereto, and vice versa.

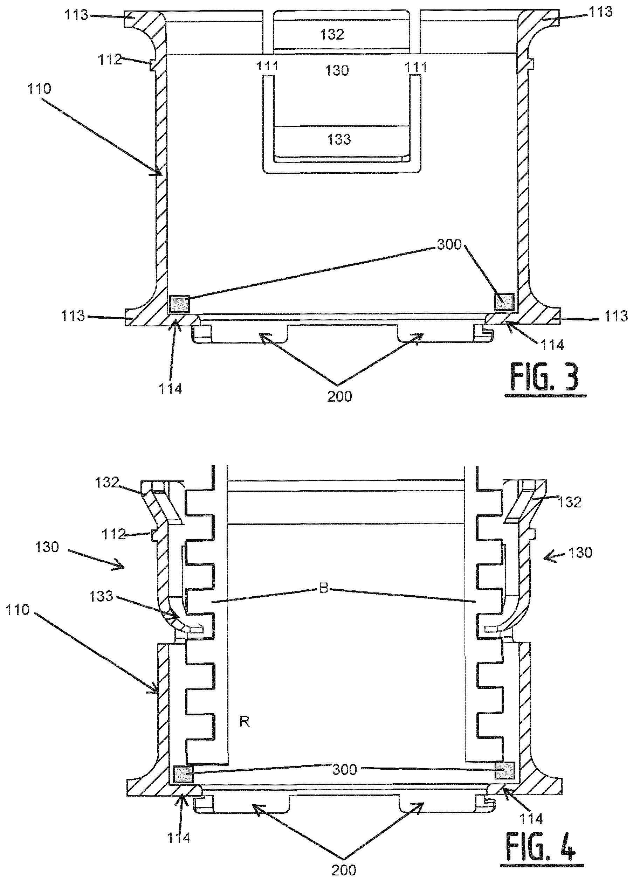

First tongue 131 comprises a coupling surface 133 which extends into the channel and is provided to couple the ventilation air duct hose to the fitting in the first state. In the first state the ventilation air duct hose is thus fixed in the fitting 100. The coupling can be realized in multiple ways, for instance by clamping the ventilation air duct hose in the channel or, as will be further elucidated with reference to figure 4, by engaging ribs of the ventilation air duct hose.

The second tongue 132 is provided and configured to, when a force is exerted thereon, pivot the first tongue 131 outward in order to move coupling element 130 into the second state, wherein the ventilation air duct hose is uncoupled in the second state. In the second state the ventilation air duct hose is thus freely movable in the channel. In this way the fitting 100 on one hand allows the ventilation air duct hose to be arranged in the fitting in simple manner. Once the ventilation air duct hose has been arranged in fitting 100, the ventilation air duct hose is fixed in the fitting using the coupling element 130 which couples the ventilation air duct hose to fitting 100 using the coupling surface 133. Because coupling element 130 is arranged pivotally, the coupling element is pivotable between the first and second position. This considerably simplifies the mounting of the ventilation air duct hose. More specifically, during arranging of the ventilation air duct hose the coupling element is pivotable into the first position, this compared to existing solutions, so that the mutual coupling can be realized in time-saving and simple manner. A further advantage of the pivotable coupling element 130 is that coupling element 130 is pivotable to the second position, for instance for maintenance to the ventilation system, in which the ventilation air duct hose can be uncoupled in rapid and simple manner. It is noted that the ventilation air duct hose is then, for instance following the maintenance work, once again couplable in simple manner by arranging it in fitting 100 again and then pivoting coupling element 130 to the first position.

According to a preferred embodiment, fitting 100 comprises an elastically deformable connection 111 between coupling element 130 and wall 110. The elastically deformable connection 111 is provided on either side of coupling element 130 and wall 110. This elastically deformable connection 111 has the advantage that such a connection is resilient. Such a resilient connection allows coupling element 130 to be urged back into one of the first or the second position, preferably the first position. In other words, the elastically deformable connection returns coupling body 130 to its rest state or rest position without external force. This further reduces the number of operations needed by a fitter to couple the ventilation air duct hose to the fitting.

According to a preferred embodiment, wall 110, coupling element 130 and connection 111 are formed integrally. This reduces the number of components comprised by the ventilation system, which reduced number of components allows for faster and simplified mounting of the ventilation air system. This further allows the fitting 100 to be formed using injection moulding as a whole, which is highly advantageous for multiple reasons. Injection moulding for instance allows the fitting to be produced rapidly and in large numbers. Injection moulding is relatively inexpensive, and the produced fittings require almost no further processing. It is noted that in such a preferred embodiment the tongues 131, 132 must be freely movable in order to keep coupling element 130 pivotable. A recess is therefore provided in practice between wall 110 and the first and second tongue 131, 132, and the connection extends from the wall to coupling element 130. The connection forms a bridge over the recess. Wall 110 is further preferably provided with a thickened portion 112, at least at the position of the connection 111 to the coupling element. The thickened portion 112 can either be provided at the position of the connection or can extend over the whole periphery of wall 110.

Figure 2 shows a perspective view of the fitting 100 according to figure 1. More specifically, figure 2 shows the fitting 100 as seen from the second open outer end.

According to the illustrated preferred embodiment, fitting 100 comprises one or more fastening elements 200 which are arranged at the position of second outer end and which are configured to couple the fitting to the external ventilation component in mutually engaging manner. The one or more fastening elements are preferably arranged and configured such that fitting 100 can be fastened to the external ventilation component by rotating the fitting about an axis. In the shown preferred embodiment the fastening elements 200 form part of a bayonet closure.

Alternatively, fitting 100 can also be configured as coupling piece for mutually connecting two ventilation air duct hoses, this preferred embodiment is however not shown. The fitting can however be provided for this purpose with one or more coupling elements 130 at both the first open outer end and the second open outer end.

Figure 3 shows a cross-section of the fitting 100 according to the plane designated in figure 1. In the figure the wall 110 is provided close to the first and/or the second outer end with a first flange 113 which protrudes from an outer surface of the wall. The first outer end which is provided with a flange 113 has the advantage that the first open outer end is reinforced. In this way the fitting 100 forms a more robust whole. The second outer end which is provided with a flange has on one hand the same advantage as the first outer end, but moreover also has a further advantage. More specifically, the flange 113 at the second outer end has the advantage that the flange lies adjacently of the ventilation system and strengthens a connection thereto. This is because flange 113 absorbs forces which would otherwise be absorbed by the mutual connection between the fitting and the ventilation system. This for instance allows the fitting to be supported on without it breaking off or being bent.

Figure 3 further shows a preferred embodiment wherein the wall 110 is provided at the position of the second outer end with a second flange 114 which protrudes from an inner surface of the wall and bounds an opening at the position of the second outer end. The second flange 114 forms a stop surface so that the fitter cannot arrange the ventilation air duct hose beyond the stop surface. The fitting further preferably comprises a sealing means 300 which is provided to be placed against the second flange 114 and configured to form together with an edge of the ventilation air duct hose a substantially airtight closure when the ventilation air duct hose is coupled in the fitting. This prevents supplied or discharged air from escaping at an undesired location in the ventilation system. This improves the thermal characteristics of the ventilation system. The power consumption of the ventilation system is furthermore also improved in this manner. Because the supplied or discharged air is prevented from escaping, a required airflow rate, which is typically provided by one or more fans (not shown), is smaller. This has the result that the fan can have smaller dimensions or can function at a lower flow rate. The consumption of the ventilation system, i.e. the fan in said example, is therefore lower owing to the improved manner of sealing with the sealing means 300.

Figure 4 shows a further cross-section of the fitting 100 according to the plane designated in figure 1. In figure 4 a ventilation air duct hose B is arranged in the channel for purposes of illustration. In the figure the coupling element 130 is provided according to a preferred embodiment close to the first open outer end. This makes coupling element 130 easily accessible during mounting and during dismounting.

According to a further preferred embodiment, the coupling surface 133 comprises an oblique surface which is configured to make the first tongue 131 move outward during arranging of ventilation air duct hose B. The ribs of the ventilation air duct hose B push against the oblique surface so that first tongue 131 moves outward. In this way the fitter is able to focus on correctly inserting the ventilation air duct hose during arranging. The fitter need here not handle the coupling element, which considerably simplifies and speeds up the mounting of the ventilation air duct hose in the fitting. When coupling element 130 is in rest in the first position, this on one hand allows an inward movement of the ventilation air duct hose B from outside the fitting into the channel to take place with a relatively low resistance.

Once the ventilation air duct hose B is in the final position, for instance against sealing means 300, the first tongue 133 then extends, in the second state, between two ribs. The second tongue 133 thus forms a stop surface which prevents ventilation air duct hose B from moving out of the channel. An outward movement of the ventilation air duct hose, without the coupling element being pivoted into the second position, out of the channel is therefore difficult. In other words, the ventilation air duct hose is secured in the channel.

Figure 4 further shows that according to a preferred embodiment, the fitting 100 comprises a further coupling element and the second coupling elements are provided diametrically relative to each other at the first open outer end. On one hand, two coupling elements 130 improve the coupling of the ventilation air duct hose B to fitting 100, as compared to one single coupling element. Owing to the diametrical position, the two coupling elements are on the other hand simultaneously pivotable, and moreover using one tool or hand of a fitter.

According to a further preferred embodiment, the second tongue 132 extends at an angle measured between a central axis of the fitting and an inner surface of the second tongue. In this way the second tongue is offset relative to the central axis of the fitting. This enables the lever action of the coupling element 130 to be improved to the advantage of the user. More specifically, this allows the first tongue to be pivoted outward in simpler manner and with less effort, so that the ventilation air duct hose B is more easily removable.

According to yet another preferred embodiment, the second tongue 132 lies substantially in line with the inner surface of the wall in the second state. This allows the ventilation air duct hose to be removed in substantially frictionless manner. In other words, the ventilation air duct hose does not collide with the second tongue while moving outward.

The skilled person will appreciate on the basis of the above description that the invention can be embodied in different ways and on the basis of different principles. The invention is not limited here to the above described embodiments. The above described embodiments and the figures are purely illustrative and serve only to increase understanding of the invention. The invention is not therefore limited to the embodiments described herein, but is defined in the claims.

## Claims

1. Ventilation system for discharging and/or supplying air comprising a ventilation collector and a ventilation air duct hose fitting (100) for coupling a ventilation air duct hose (B) to the ventilation system, wherein the fitting has a first open outer end which is configured to receive the ventilation air duct hose and a second open outer end configured to be coupled to the ventilation system, the fitting comprising:
a wall (110) bounding a channel (120) which extends between the first open outer end and the second open outer end and in which the ventilation air duct hose is arrangeable;
a coupling element (130) which is connected pivotally to the wall (110) so that the coupling element is pivotable between a first state and a second state, wherein the coupling element has a first tongue (131) and a second tongue (132) which extend in opposite directions relative to each other;
wherein the first tongue (131) comprises a coupling surface (133) which extends into the channel and is provided to couple the ventilation air duct hose to the fitting in the first state;
wherein the second tongue (132) is provided and configured to, when a force is exerted thereon, pivot the first tongue outward in order to move the coupling element (130) into the second state, wherein the ventilation air duct hose is uncoupled in the second state.

2. Ventilation system according to the foregoing claim, wherein the ventilation air duct hose fitting (100) comprises an elastically deformable connection (111) between the coupling element (130) and the wall (110).

3. Ventilation system according to any one of the foregoing claims, wherein the wall, the coupling element and the connection are formed integrally.

4. Ventilation system according to the foregoing claim, wherein the wall (110) is provided with a thickened portion (112), at least at the position of the connection (111) to the coupling element.

5. Ventilation system according to any one of the foregoing claims, wherein the coupling surface (133) comprises an oblique surface which is configured to make the first tongue (131) move outward during arranging of ventilation air duct hose.

6. Ventilation system according to any one of the foregoing claims, wherein the second tongue (132) extends at an angle measured between a central axis of the fitting and an inner surface of the second tongue.

7. Ventilation system according to any one of the foregoing claims, wherein the second tongue (132) lies substantially in line with the inner surface of the wall in the second state.

8. Ventilation system according to any one of the foregoing claims, wherein the coupling element is provided close to the first open outer end.

9. Ventilation system according to any one of the foregoing claims, wherein the ventilation air duct hose fitting (100) comprises a further coupling element, wherein the coupling elements are provided diametrically relative to each other at the first open outer end.

10. Ventilation system according to any one of the foregoing claims, wherein the wall (110) is provided close to the first and/or the second outer end with a first flange (113) which protrudes from an outer surface of the wall.

11. Ventilation system according to any one of the foregoing claims, wherein the wall (110) is provided at the position of the second outer end with a second flange (114) which protrudes from an inner surface of the wall and bounds an opening at the position of the second outer end.

12. Ventilation system according to the foregoing claim, further comprising a sealing means (300) which is provided to be placed against the second flange (114) and is configured to form together with an edge (R) of the ventilation air duct hose (B) a substantially airtight closure when the ventilation air duct hose is coupled in the fitting (100).

13. Ventilation system according to any one of the foregoing claims, further comprising one or more fastening elements (200) which are arranged at the position of second outer end and which are configured to couple the fitting to the external ventilation component in mutually engaging manner.

14. Ventilation system according to the foregoing claim, wherein the one or more fastening elements are arranged and configured such that the fitting can be fastened to the external ventilation component by rotating the fitting about an axis (A).

## Patentansprüche

1. Lüftungssystem zum Abführen und/oder Zuführen von Luft, umfassend einen Lüftungssammler und eine Lüftungskanalschlaucharmatur (100)
zum Koppeln eines Lüftungskanalschlauchs (B) mit dem Lüftungssystem, wobei die Armatur ein erstes offenes Außenende, das konfiguriert ist, um den Lüftungskanalschlauch aufzunehmen, und ein zweites offenes Außenende aufweist, das konfiguriert ist, um mit dem Lüftungssystem gekoppelt zu werden, die Armatur umfassend:
eine Wand (110), die einen Kanal (120) begrenzt, der sich zwischen dem ersten offenen Außenende und dem zweiten offenen Außenende erstreckt und in dem der Lüftungskanalschlauch anordbar ist;
ein Kopplungselement (130), das mit der Wand (110) schwenkbar verbunden ist, sodass das Kopplungselement zwischen einem ersten Zustand und einem zweiten Zustand schwenkbar ist, wobei das Kopplungselement eine erste Zunge (131) und eine zweite Zunge (132) aufweist, die sich in entgegengesetzten Richtungen zueinander erstrecken;
wobei die erste Zunge (131) eine Kopplungsoberfläche (133) umfasst, die sich in den Kanal erstreckt und bereitgestellt ist, um den Lüftungskanalschlauch in dem ersten Zustand mit der Armatur zu koppeln;
wobei die zweite Zunge (132) bereitgestellt und konfiguriert ist, um, wenn eine Kraft darauf ausgeübt wird, die erste Zunge nach außen zu schwenken, um das Kopplungselement (130) in den zweiten Zustand zu bewegen, wobei der Lüftungskanalschlauch in dem zweiten Zustand entkoppelt ist.

2. Lüftungssystem nach dem vorstehenden Anspruch, wobei die Lüftungskanalschlaucharmatur (100) eine elastisch verformbare Verbindung (111) zwischen dem Kopplungselement (130) und der Wand (110) umfasst.

3. Lüftungssystem nach einem der vorstehenden Ansprüche, wobei die Wand, das Kopplungselement und die Verbindung einstückig ausgebildet sind.

4. Lüftungssystem nach dem vorstehenden Anspruch, wobei die Wand (110) mindestens an der Stelle der Verbindung (111) mit dem Kopplungselement mit einem verdickten Abschnitt (112) versehen ist.

5. Lüftungssystem nach einem der vorstehenden Ansprüche, wobei die Kopplungsoberfläche (133) eine schräge Oberfläche umfasst, die konfiguriert ist, um zu verursachen, dass die erste Zunge (131) während des Anordnens des Lüftungskanalschlauchs sich nach außen bewegt.

6. Lüftungssystem nach einem der vorstehenden Ansprüche, wobei die zweite Zunge (132) sich in einem Winkel erstreckt, der zwischen einer Mittelachse der Armatur und einer Innenoberfläche der zweiten Zunge gemessen wird.

7. Lüftungssystem nach einem der vorstehenden Ansprüche, wobei die zweite Zunge (132) in dem zweiten Zustand im Wesentlichen in einer Linie mit der Innenoberfläche der Wand liegt.

8. Lüftungssystem nach einem der vorstehenden Ansprüche, wobei das Kopplungselement in der Nähe des ersten offenen Außenendes bereitgestellt ist.

9. Lüftungssystem nach einem der vorstehenden Ansprüche, wobei die Lüftungskanalschlaucharmatur (100) ein weiteres Kopplungselement umfasst, wobei die Kopplungselemente diametral zueinander an dem ersten offenen Außenende bereitgestellt sind.

10. Lüftungssystem nach einem der vorstehenden Ansprüche, wobei die Wand (110) in der Nähe des ersten und/oder des zweiten Außenendes mit einem ersten Flansch (113) bereitgestellt ist, der von einer Außenoberfläche der Wand vorsteht.

11. Lüftungssystem nach einem der vorstehenden Ansprüche, wobei die Wand (110) an der Stelle des zweiten Außenendes mit einem zweiten Flansch (114) bereitgestellt ist, der von einer Innenoberfläche der Wand vorsteht und eine Öffnung an der Stelle des zweiten Außenendes begrenzt.

12. Lüftungssystem nach dem vorstehenden Anspruch, ferner umfassend ein Dichtungsmittel (300), das bereitgestellt ist, um gegen den zweiten Flansch (114) platziert zu werden, und konfiguriert ist, um zusammen mit einer Kante (R) des Lüftungskanalschlauchs (B) einen im Wesentlichen luftdichten Verschluss auszubilden, wenn der Lüftungskanalschlauch in der Armatur (100) gekoppelt ist.

13. Lüftungssystem nach einem der vorstehenden Ansprüche, ferner umfassend ein oder mehrere Befestigungselemente (200), die an der Stelle des zweiten Außenendes angeordnet sind und die konfiguriert sind, um die Armatur in gegenseitigem Eingriff mit der externen Lüftungskomponente zu koppeln.

14. Lüftungssystem nach dem vorstehenden Anspruch, wobei das eine oder die mehreren Befestigungselemente derart angeordnet und konfiguriert sind, dass die Armatur an der externen Lüftungskomponente durch Drehen der Armatur um eine Achse (A) befestigt werden kann.

## Revendications

1. Système de ventilation destiné à évacuer et/ou fournir de l'air comprenant un collecteur de ventilation et un raccord de tuyau de conduit d'air de ventilation (100) pour accoupler un tuyau de conduit d'air de ventilation (B) au système de ventilation, dans lequel le raccord a une première extrémité extérieure ouverte qui est conçue pour recevoir le tuyau de conduit d'air de ventilation et une seconde extrémité extérieure ouverte conçue pour être accouplée au système de ventilation, le raccord comprenant :
une paroi (110) délimitant un canal (120) qui s'étend entre la première extrémité extérieure ouverte et la seconde extrémité extérieure ouverte et dans lequel le tuyau de conduit d'air de ventilation peut être disposé ;
un élément d'accouplement (130) qui est relié de manière pivotante à la paroi (110) de sorte que l'élément d'accouplement puisse pivoter entre un premier état et un second état, dans lequel l'élément d'accouplement a une première languette (131) et une seconde languette (132) qui s'étendent dans des directions opposées l'une par rapport à l'autre ;
dans lequel la première languette (131) comprend une surface d'accouplement (133) qui s'étend dans le canal et qui est prévue pour accoupler le tuyau de conduit d'air de ventilation au raccord dans le premier état ;
dans lequel la seconde languette (132) est prévue et conçue pour faire pivoter la première languette vers l'extérieur lorsqu'une force est exercée sur celle-ci, afin de déplacer l'élément d'accouplement (130) dans le second état, dans lequel le tuyau de conduit d'air de ventilation est désaccouplé dans le second état.

2. Système de ventilation selon la revendication précédente, dans lequel le raccord de tuyau de conduit d'air de ventilation (100) comprend une liaison élastiquement déformable (111) entre l'élément d'accouplement (130) et la paroi (110).

3. Système de ventilation selon l'une quelconque des revendications précédentes, dans lequel la paroi, l'élément d'accouplement et la liaison sont formés d'un seul tenant.

4. Système de ventilation selon la revendication précédente, dans lequel la paroi (110) est pourvue d'une partie épaissie (112), au moins au niveau de la position de la liaison (111) à l'élément d'accouplement.

5. Système de ventilation selon l'une quelconque des revendications précédentes, dans lequel la surface d'accouplement (133) comprend une surface oblique qui est conçue pour faire en sorte que la première languette (131) se déplace vers l'extérieur lors de la disposition du tuyau de conduit d'air de ventilation.

6. Système de ventilation selon l'une quelconque des revendications précédentes, dans lequel la seconde languette (132) s'étend selon un angle mesuré entre un axe central du raccord et une surface intérieure de la seconde languette.

7. Système de ventilation selon l'une quelconque des revendications précédentes, dans lequel la seconde languette (132) est sensiblement alignée sur la surface intérieure du mur dans le second état.

8. Système de ventilation selon l'une quelconque des revendications précédentes, dans lequel l'élément d'accouplement est prévu à proximité de la première extrémité extérieure ouverte.

9. Système de ventilation selon l'une quelconque des revendications précédentes, dans lequel le raccord de tuyau de conduit d'air de ventilation (100) comprend un élément d'accouplement supplémentaire, dans lequel les éléments d'accouplement sont prévus diamétralement l'un par rapport à l'autre au niveau de la première extrémité extérieure ouverte.

10. Système de ventilation selon l'une quelconque des revendications précédentes, dans lequel la paroi (110) est pourvue, à proximité de la première et/ou de la seconde extrémité extérieure, d'une première bride (113) qui fait saillie depuis une surface extérieure de la paroi.

11. Système de ventilation selon l'une quelconque des revendications précédentes, dans lequel la paroi (110) est pourvue, au niveau de la position de la seconde extrémité extérieure, d'une seconde bride (114) qui fait saillie à partir d'une surface intérieure de la paroi et délimite une ouverture au niveau de la position de la seconde extrémité extérieure.

12. Système de ventilation selon la revendication précédente, comprenant en outre un moyen d'étanchéité (300) qui est prévu pour être placé contre la seconde bride (114) et est conçu pour former avec un bord (R) du tuyau de conduit d'air de ventilation (B) une fermeture sensiblement étanche à l'air lorsque le tuyau de conduit d'air de ventilation est accouplé dans le raccord (100).

13. Système de ventilation selon l'une quelconque des revendications précédentes, comprenant en outre un ou plusieurs éléments de fixation (200) qui sont disposés au niveau de la position de la seconde extrémité extérieure et qui sont conçus pour accoupler le raccord au composant de ventilation externe par mise en prise mutuelle.

14. Système de ventilation selon la revendication précédente, dans lequel le ou les éléments de fixation sont disposés et conçus de telle sorte que le raccord peut être fixé au composant de ventilation externe par rotation du raccord autour d'un axe (A).
